# EUROPEAN PATENT APPLICATION

(11) **EP 4 277 121 A1**
(43) Date of publication of application: **15.11.2023**
(21) Application number: 22173118.5
(22) Date of filing: 12.05.2022
(51) Int. Cl.: H02S 50/10

(54) **METHOD AND APPARATUS FOR DETECTION OF FAULTY CONNECTIONS OF PHOTOVOLTAIC MODULES**

(71) Applicant: Fronius International GmbH, 4643 Pettenbach (AT)
(72) Inventor: POZSGAY, Andras, 4643 Pettenbach (AT)
(74) Representative: Bratovic, Nino Maria

(57) **Abstract**

A method and apparatus or detection of faulty installations of Photovoltaic Modules (5) equipped with associated Module Level Shutdown Devices, MLSDs, (3) connected serially as a chain within a string (1) of Photovoltaic Modules to a string loop interface of a detector device (2) wherein the method comprises the steps of: transmitting (S1) by the detector device( 2) a Permission to Operate, PTO, signal through its loop string interface to a chain of serially connected Module Level Shutdown Devices, MLSDs, (3) of the Photovoltaic Modules string (1) using Power Line Communication, PLC; capturing (S2) by the detector device (2) a string voltage waveform provided by the chain of serially Module Level Shutdown Devices, MLSDs, (3) of the Photovoltaic Module string (1) to the loop string interface of the detector device (2) as a result of switch-on transients generated by the Module Level Shutdown Devices, MLSDs, (3) in response to the Permission to Operate, PTO, signal received by the chain of serially connected Module Level Shutdown Devices, MLSDs, (3) from the loop string interface of the detector device (2), wherein switch-on delays of the generated switch-on transients are spread in a predefined maximum delay time period; and analyzing (S3) by the detector device (2) the captured string voltage waveform ,Vstr ,provided by the chain of serially connected Module Level Shutdown Devices, MLSDs, (3) of the Photovoltaic Module string (1) to determine a number, N, of Photovoltaic Modules (5) and associated Module Level Shutdown Devices, MLSDs, (3) within said Photovoltaic Module string (1) being installed correctly within said Photovoltaic Module string (1) .

## Description

The invention relates to a method and apparatus for detection of faulty connections of Photovoltaic Modules equipped with Module Level Shutdown Devices by means of a detector device connected to the Module Level Shutdown Devices.

A photovoltaic system can comprise one or more strings of Photovoltaic Modules (PVMs) within a photovoltaic array. A photovoltaic array can be connected via a DC line to an inverter adapted to convert the DC current received from the photovoltaic array into an AC current. Each Photovoltaic Module of the Photovoltaic Module string can comprise an associated Module Level Shutdown Device (MLSD) used to monitor and/or to control the associated Photovoltaic Modules via power cables connecting for instance a base station of a module level shutdown system with the Module Level Shutdown Devices.

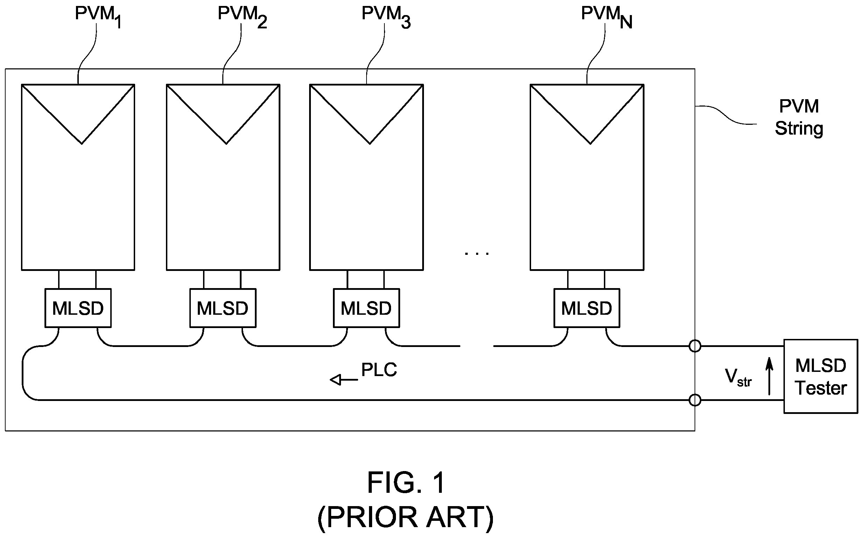

Fig. 1 shows a conventional system comprising a predefined number N of Photovoltaic Modules PVMi each having an associated Module Level Shutdown Device MLSD. The Module Level Shutdown Devices MLSDs are connected in series via a DC-cable to a test device which can be used to test the functionality of the photovoltaic module string. The device can communicate with the Module Level Shutdown Devices MLSDs by means of Power line Communication PLC as illustrated in Fig. 1. During installation of the photovoltaic system as illustrated in Fig. 1, it can be useful to check the number N of Photovoltaic Modules PVMs functioning properly in the Photovoltaic Module string. The number N of Photovoltaic Modules can be calculated on the basis of the open circuit voltage V_{oc} of the Photovoltaic Modules PVM. For instance, a measured string voltage Vₛₜᵣ can be divided by the open circuit voltage V_{oc} to determine the number of Photovoltaic Modules within the Photovoltaic Module string. However, the open circuit voltage V_{oc} can vary depending on the module type of the Photovoltaic Module PVMs and other ambient parameters such as temperature or sunlight radiating on the Photovoltaic Modules PVMs. A difficulty resides in that the open circuit voltage V_{oc} varies depending on the module type of the Photovoltaic Module PVM, the temperature, sunshine etc. For example, since the measurement value Vₛₜᵣ = 480V may correspond either to 13 Photovoltaic Modules PVMs with each 37V_{oc} or to 14 Photovoltaic Modules PVMs with each 34V_{oc} is the same, it is difficult to say if all Photovoltaic Modules PVMs have been correctly connected. Accordingly, with the conventional method, it is not possible to verify whether all Photovoltaic Modules PVMs and their associated Module Level Shutdown Devices MLSDs within a Photovoltaic Module string have been installed correctly, in particular due to the uncertainty of the open circuit voltage V_{oc} of the installed Photovoltaic Modules PVMs.

Accordingly, it is an object of the present invention to provide a method and apparatus for reliable detection of faulty connections of Photovoltaic Modules within a Photovoltaic Module string.

This object is achieved according to a first aspect of the present invention by a method for detection of faulty connections of Photovoltaic Modules comprising the features of claim 1.

The invention provides according to the first aspect a method for detection of faulty installations of Photovoltaic Modules equipped with associated Module Level Shutdown Devices, MLSDs, connected serially within a string of Photovoltaic Modules to a string loop interface of a detector device wherein the method comprises the steps of:
transmitting by the detector device a Permission to Operate, PTO, signal through its string loop interface to a chain of serially connected Module Level Shutdown Devices, MLSDs, of the Photovoltaic Modules string using Power Line Communication, PLC;
capturing by the detector device a string voltage waveform applied by the chain of serially Module Level Shutdown Devices, MLSDs, of the Photovoltaic Module string to the string loop interface of the detector device as a result of switch-on transients generated by the Module Level Shutdown Devices, MLSDs, in response to the Permission to Operate, PTO, signal received by the chain of serially connected Module Level Shutdown Devices, MLSDs, from the string loop interface of the detector device, wherein switch-on delays of the generated switch-on transients are spread in a predefined maximum delay time period; and
analyzing by the detector device the captured string voltage waveform, provided by the chain of serially connected Module Level Shutdown Devices, MLSDs, of the Photovoltaic Module string to determine a number, N, of Photovoltaic Modules and associated Module Level Shutdown Devices, MLSDs, within said Photovoltaic Module string being installed correctly within said Photovoltaic Module string

In a possible embodiment of the method according to the first aspect of the present invention, the switch-on transients generated by the Module Level Shutdown Devices, MLSDs, of the Photovoltaic Module string are spread randomly in the predefined maximum delay time period.

In a still further possible embodiment of the method according to the first aspect of the present invention, the detector device connected to the chain of serially Module Level Shutdown Devices, MLSDs, of the Photovoltaic Module string is implemented in an inverter device.

In an alternative embodiment of the method according to the first aspect of the present invention, the detector device connected to the chain of serially connected Module Level Shutdown Devices, MLSDs, of the Photovoltaic Module string is implemented in a test device used to test the Photovoltaic Module string.

In a further possible embodiment of the method according to the first aspect of the present invention, the captured string voltage waveform provided by the Photovoltaic Module string is analyzed by a processing unit of the detector device in the time domain.

In a still further possible embodiment of the method according to the first aspect of the present invention, the captured string voltage waveform provided by the Photovoltaic Module string is analyzed by a processing unit of the detector device after signal transformation in the frequency domain.

In a still further possible embodiment of the method according to the first aspect of the present invention, the captured string voltage waveform comprises a staircase-shaped string voltage applied to the string loop interface of the detector device connected to the chain of serially connected Module Level Shutdown Devices, MLSDs, of the Photovoltaic Module, PVM, string and is converted by an Analog-to-Digital Converter, ADC, of a data acquisition unit of the detector device with a certain sampling rate, SR, into a digital signal comprising string voltage data samples stored in a data memory of the data acquisition unit of said detector device.

In a still further possible embodiment of the method according to the first aspect of the present invention, a sample histogram h is derived by the processing unit of the detector device from the string voltage data samples stored in the data memory of the data acquisition unit of said detector device.

In a further possible embodiment of the method according to the first aspect of the present invention, the sample histogram h is derived from the stored string voltage data samples by counting repeatedly for the whole string voltage waveform the string voltage data samples having (substantially) the same constant string voltage applied by the chain of serially connected Module Level Shutdown Devices, MLSDs, of the Photovoltaic Module string to the string loop interface of the detector device connected to the chain of serially connected Module Level Shutdown Devices, MLSDs, of said Photovoltaic Module string in a closed loop.

In a further possible embodiment of the method according to the first aspect of the present invention, the processing unit of the detector device performs a Discrete Fourier Transform, DFT, on the histogram h of the string voltage data samples to calculate a spectrum H of the sample histogram h in the frequency domain.

In a further possible embodiment of the method according to the first aspect of the present invention, a number of periods between peaks in the calculated sample histogram h corresponding to a number of voltage steps in the staircase-shaped string voltage waveform provided by the Photovoltaic Modules of the Photovoltaic Module string to the string loop interface of the detector device connected to the Photovoltaic Module string indicates the number of correctly installed Photovoltaic Modules within said Photovoltaic Module string-

It is also possible to determine an average open circuit voltage, V_{oc}, of the Photovoltaic Modules installed correctly within the Photovoltaic Module string to investigate the health condition of the respective Photovoltaic Module string.

In a still further possible embodiment of the method according to the first aspect of the present invention, a DFT index at a maximum peak value within the calculated histogram spectrum H derived by the processing unit of the detector device of the Photovoltaic Module string indicates a number, N, of Photovoltaic Modules and associated Module Level Shutdown Devices, MLSDs, installed correctly within the Photovoltaic Module string.

In a further possible embodiment of the method according to the first aspect of the present invention, the determined number, N, of Photovoltaic Modules and associated Module Level Shutdown Devices, MLSDs, installed correctly within the Photovoltaic Module string is compared by a comparator of the processing unit of the detector device to a predefined set number, Nₛₑₜ, of Photovoltaic Modules to verify that all Photovoltaic Modules and associated Module Level Shutdown Devices, MLSDs, have been installed correctly to the string loop interface of the detector device.

In a still further possible embodiment of the method according to the first aspect of the present invention, if the number, N, of Photovoltaic Modules and associated Module Level Shutdown Devices, MLSDs, installed correctly within the Photovoltaic Module string and connected correctly to the detector device is less than the predefined set number, Nₛₑₜ, countermeasures are triggered automatically by a controller of the detector device.

In a still further possible embodiment of the method according to the first aspect of the present invention, if the number, N, of Photovoltaic Modules and associated Module Level Shutdown Devices, MLSDs, installed correctly within the Photovoltaic Module string and connected correctly to the detector device is less than the predefined set number, Nₛₑₜ, the Module Level Shutdown Devices, MLSDs, of the Photovoltaic Module string are switched off by stopping the Permission to Operate, PTO, signal and are switched on again by transmitting again the Permission to Operate, PTO, signal in order to repeat the detection procedure.

In a still further possible embodiment of the method according to the first aspect of the present invention, the Permission to Operate, PTO, signal is a periodic signal transmitted by means of Power line Communication, PLC, by a signal transmission unit of the detector device connected via a pair of DC cables to the chain of serially connected Module Level Shutdown Devices, MLSDs, of the Photovoltaic Module string in a downlink channel.

In a still further possible embodiment of the method according to the first aspect of the present invention, the Permission to Operate, PTO, signal comprises an encoded address to activate an associated Module Level Shutdown Device, MLSD, of the Photovoltaic Module string individually and to trigger the generation of a corresponding switch-on transient to switch on the Photovoltaic Module connected to the addressed Module Level Shutdown Device, MLSD, individually in response to the received Power line Communication, PLC, Permission to Operate, PTO, signal.

The invention provides according to a further aspect a detector device comprising the features of claim 12.

The invention provides according to the second aspect a detector device having a string loop interface connected to a chain of serially connected Module Level Shutdown Devices, MLSDs, of a Photovoltaic Module string, said detector device comprising means for performing the method according to the first aspect of the present invention.

In a possible embodiment of the detector device according to the second aspect of the present invention, the detector device comprises
a signal transmitting unit adapted to transmit by means of Power line Communication, PLC, a Permission to Operate, PTO, signal through the string loop interface of the detector device to a chain of serially connected Module Level Shutdown Devices, MLSDs, of the Photovoltaic Module string,
a signal capturing unit adapted to capture a string voltage waveform provided by the chain of serially connected Module Level Shutdown Devices, MLSDs, of the Photovoltaic Module, string to the string loop interface of the detector device as a result of switch-on transient steps generated by the chain of serially connected Module Level Shutdown Devices, MLSDs, of the Photovoltaic Module string in response to the received Permission to Operate, PTO, signal, to the string loop interface of the detector device, wherein switch-on delays of the switch-on transients are spread in a predefined maximum delay time period; and
a processing unit adapted to analyze the captured string voltage waveform provided by the chain of serially connected Module Level Shutdown Devices, MLSDs, of the Photovoltaic Module string to the string loop interface of the detector device to determine a number, N, of Photovoltaic Modules and associated Module Level Shutdown Devices, MLSDs, within the Photovoltaic Module string being installed correctly within said Photovoltaic Module string.

In a further possible embodiment of the detector device according to the second aspect of the present invention, the detector device further comprises a user interface and/or a control interface to signal a faulty installation or a failure-free installation of Photovoltaic Modules and associated Module Level Shutdown Devices, MLSDs, within the Photovoltaic Module string.

The invention further provides according to a further aspect a Module Level Shutdown Device, MLSD, of a Photovoltaic Module string comprising the features of claim 15.

The invention provides according to a third aspect a Module Level Shutdown Device, MLSD, of a Photovoltaic Module string comprising:
a first interface connectable via DC-cables in a chain with other Module Level Shutdown Devices, MLSDs, of the Photovoltaic Module string to a string loop interface of a detector device to form a closed loop,
a second interface connected to an associated Photovoltaic Module and
a controller adapted to generate a control signal applied to a main switch of the Module Level shutdown Device, MLSD, used to switch on or to switch off the associated Photovoltaic Module in response to a Permission to Operate, PTO, signal received by the Module Level Shutdown Device, MLSD, via its first interface from the string loop interface of the detector device, wherein a delay of the control signal with respect to a reception time of the Permission to Operate, PTO, signal is spread by the controller of the Module Level Shutdown Device, MLSD, in a predefined maximum delay time period.

In a possible embodiment of the Module Level Shutdown Device, MLSD, according to the third aspect of the present invention, the controller of the Module Level Shutdown Device, MLSD, is adapted to spread the control signal applied to the main switch of the Module Level Shutdown Device, MLSD, to switch on or to switch off the associated Photovoltaic Module randomly within the predefined maximum delay time period.

In the following, possible embodiments of the different aspects of the present invention are described in more detail with reference to the enclosed figures.
- Fig. 1: shows a block diagram of a conventional MLSD test setup for illustrating a problem underlying the present invention;
- Fig. 2: illustrates schematically a Photovoltaic Module string connected to a detector device according to an aspect of the present invention;
- Fig. 3: shows a block diagram of a possible exemplary embodiment of a detector device according to a further aspect of the present invention;
- Fig. 4: shows a flowchart of an exemplary embodiment of a method for detection of faulty connections of Photovoltaic Modules within a Photovoltaic Module string according to a further aspect of the present invention;
- Fig. 5: shows a possible exemplary embodiment of a Module Level Shutdown Device, MLSD, according to a further aspect of the present invention;
- Fig. 6: shows a block diagram of a possible exemplary embodiment of a control unit within a Module Level Shutdown Device, MLSD, as illustrated in Fig. 5;
- Fig. 7: shows a further exemplary embodiment of a Module Level Shutdown Device, MLSD, according to the present invention;
- Fig. 8: shows a block diagram of a possible embodiment of a control unit within a Module Level Shutdown Device, MLSD, as illustrated in Fig. 7;
- Fig. 9: shows a signal diagram for illustrating the operation of the method and apparatus according to the present invention;
- Fig. 10: shows a further signal diagram for illustrating a possible exemplary embodiment of the method and apparatus according to the present invention;
- Fig. 11: shows an exemplary histogram to illustrate the operation of the method and apparatus according to the present invention;
- Fig. 12: shows a further diagram for illustrating the operation of a possible exemplary embodiment of the method and apparatus according to the present invention.

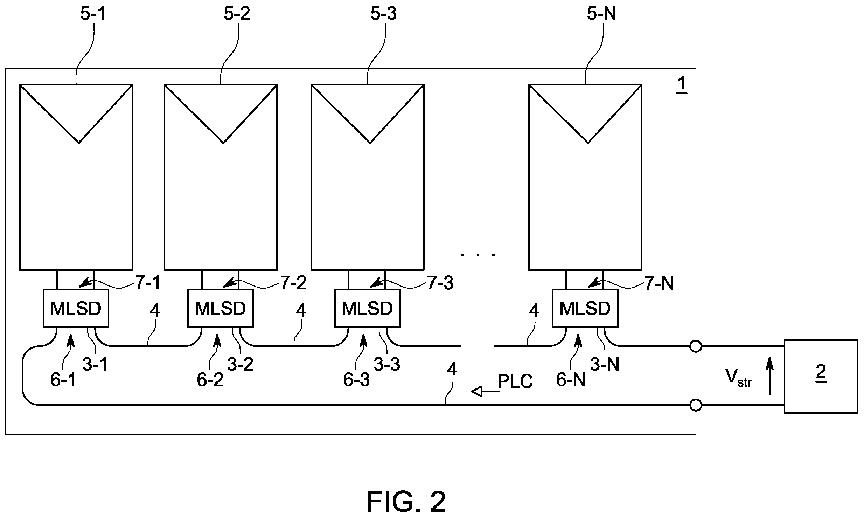

As can be seen in Fig. 2, a Photovoltaic Module string 1 can be connected a detector device 2. The detector device has a string loop interface which can be connected via DC-cables 4 to a number of Module Level Shutdown Devices 3-1, 3-2, 3-3...3-N. The Module Level Shutdown Devices (MLSDs) 3-i are serially connected in a MLSD chain to the string loop interface of the detector device 2 of the Photovoltaic Module string 1 to form a closed loop as shown in Fig. 2. Each Module Level Shutdown Device 3-i comprises an associated Photovoltaic Module 5-i of the Photovoltaic Module string 1 as shown in the schematic diagram of Fig. 2.

Each Module Level Shutdown Device 3-i of the Photovoltaic Module string 1 accordingly comprises a first interface 6 used for serial connection via two DC-cables 4 to its immediate neighboring Module Level Shutdown Devices 3-(i-1),3-(i+1) to form a chain with other Module Level Shutdown Devices 3-i which is connected via a pair of DC-Cables 4 to the string loop interface of the detector device 2 to form a closed loop. As can be seen the first Module Level Shutdown Devices 3-1 and the last Module Level Shutdown Device 3-N of the chain of serially connected Module Level Shutdown Devices 3-i within the Photovoltaic Module string 1 are connected via a pair of DC-cables 4 to the string loop interface of the detector device 2. The detector device 2 can be integrated in another unit, in particular in an inverter device which may be connected permanently to the Photovoltaic Module string 1. The detector device 2 can also be integrated in a portable test device connectable to the Photovoltaic Module string 1 for performing tests.

Each Module Level Shutdown Device 3-i comprises a second interface 7 connected to its associated Photovoltaic Module 5-i as shown in Fig. 2. The Photovoltaic Module 5-i generates an electrical current I in response to received sunlight. The electrical current I is supplied to the second interface 7 of the Module Level Shutdown Device 3-i. At the first interface 6, a corresponding voltage V is generated. The circuit voltages V of the serially connected Module Level Shutdown Devices 3-i of the MLSD chain generate a string voltage Vₛₜᵣ applied to the string loop interface of the detector device 2. The detector device 2 can communicate with the Module Level Shutdown Devices 3-i using Power line Communication PLC. Accordingly, the communication takes place via the DC-cables 4 connecting the Module Level Shutdown Devices 3-i serially in a chain with each other and connecting them to the string loop interface of the detector device 2 forming a closed loop as illustrated in Fig. 2.

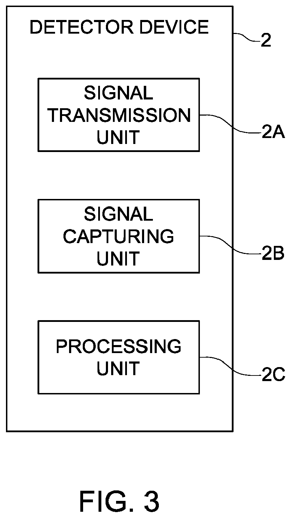

Fig. 3 shows a block diagram of a possible exemplary embodiment of a detector device 2 of a Photovoltaic Module string 1. The detector device 2 comprises in the illustrated embodiment of Fig. 3 a signal transmission unit 2A, a signal capturing unit 2B and a processing unit 2C.

The signal transmission unit 2A of the detector device 2 is adapted to transmit in a possible embodiment via the string loop interface a Permission to Operate, PTO, signal via a Powerline Communication PLC to the connected Module Level Shutdown Devices 3-i of the Photovoltaic Module string 1. The string loop interface of the detector device 2 comprises the connection of the detector device 2 by two DC-cables 4 to the first interface 6-1 of first MLSD 3-1 and to the first interface 6-N of the last MLSD 3-N of the chain of serially connected Module Level Shutdown Devices 3-i of the photovoltaic module string 1. So the signal transmission unit 2A within the detector device 2 transmits a Permission to Operate, PTO, signal to activate the Module Level Shutdown Devices, MLSDs, 3. The Module Level Shutdown Devices, MLSDs, 3 connect the PV modules 5 one after the other, because each MLSD 3 causes an individual connection delay.

The signal capturing unit 2B of the detector device 2 is adapted to capture a string voltage waveform Vₛₜᵣ(t) provided by the chain of serially connected Module Level Shutdown Devices (MLSDs) 3-i of the Photovoltaic Module string 1 to the string loop interface of the detector device 2 as a result from the non-simultaneous connection of the MLSDs 3. A result of this are switch-on transient steps generated by the Module Level Shutdown Devices 3-i of the Photovoltaic Module string 1 in response to the received Permission to Operate, PTO, signal, wherein a switch-on delay of the switch-on transient is spread in a predefined maximum delay time period.

As illustrated in Fig. 3, the detector device 2 further comprises a processing unit 2C adapted to analyze the captured string voltage waveform Vₛₜᵣ(t) provided by the chain of serially connected Module Level Shutdown Devices 3-i of the Photovoltaic Module string 1 to determine a number N of Photovoltaic Modules 5 and associated Module Level Shutdown Devices 3 within the Photovoltaic Module string 1 having been installed correctly within said Photovoltaic Module string 1.

In a possible embodiment, the detector device 2 may comprise additional entities. In a possible embodiment, the detector device 2 may comprise a user interface UI to signal a faulty installation or a failure-free installation of Photovoltaic Modules 5 and their associated Module Level Shutdown Devices 3 within the Photovoltaic Module string 1. The detector device 2 may also comprise an integrated control and data interface to signal the faulty installation or the failure-free installation of the Photovoltaic Modules 5 and their associated Module Level Shutdown Devices 3 within the Photovoltaic Module string 1 to a remote central control entity of an automation system.

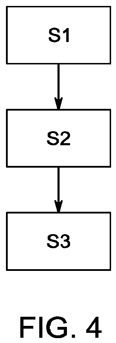

Fig. 4 shows a flowchart of an exemplary embodiment of a method for detection of faulty connections of Photovoltaic Modules 5 equipped with associated Module Level Shutdown Devices 3 by means of a detector device 2 as illustrated in Fig. 3. In the illustrated exemplary embodiment of Fig. 4, the detection method comprises three main method steps S1, S2, S3.

In a first step S1, the signal transmission unit 2A of the detector device 2 transmits a Permission to Operate, PTO, signal to the loop of serially connected Module Level Shutdown Devices 3-i of the associated Photovoltaic Module string 1 using Power line Communication PLC to activate the Module Level Shutdown Devices, MLSDs, 3 one after the other with a connection delay.

In a further step S2, the signal capturing unit 2B of the detector device 2 connected to the chain of serially connected Module Level Shutdown Devices 3-i of the Photovoltaic Module string 1 captures a string voltage waveform Vₛₜᵣ(t) provided by the chain of Module Level Shutdown Devices 3-i of the Photovoltaic Module string 1 as a result from the non-simultaneous connection of the MLSDs 3. A result of this is switch-on transients generated by the Module Level Shutdown Devices 3-i in response to the Permission to Operate, PTO, signal received by the Module Level Shutdown Devices 3-i through the DC-cables 4 from the string loop interface of the detector device 2 of the loop illustrated in Fig. 2. The switch-on delay of the switch-on transients is spread within a predefined maximum delay time period. In a possible embodiment, the switch-on delay of the switch-on transients is spread randomly in the predefined maximum delay time period. In a possible implementation, the switch-on delay of the switch-on transients can be spread in a maximum delay time period defined in a range between 0.1 seconds and 10 seconds. For example at each first method step S1, a new random value can be generated in each MLSD 3.

In a further step S3, the processing unit 2C of the detector device 2 analyzes the captured string voltage waveform Vₛₜᵣ(t) provided by a chain of Module Level Shutdown Devices 3-i serially connected in the Photovoltaic Module string 1 to the string loop interface of the detector device 2 to determine a number N of Photovoltaic Modules 5-i and their associated Module Level Shutdown Devices 3-i within the Photovoltaic Module string 1 having been installed correctly within the respective Photovoltaic Module string 1.

In a possible embodiment, the detector device 2 illustrated in Fig. 2 and shown in the block diagram of Fig. 3 can be implemented in an inverter device which inverts a DC string voltage generated by the Photovoltaic Module string 1 into an AC current supplied to a load and/or to a grid.

In an alternative embodiment, the detector device 2 as shown in Fig. 2 and as illustrated in the block diagram of Fig. 3 can also be implemented in a test device used to test the Photovoltaic Module string 1. This test device can be a portable device which is connected to the Photovoltaic Module, string 1 for performing a test procedure. This test procedure can include the detection method as illustrated in the flowchart of Fig. 4.

The string voltage waveform Vₛₜᵣ(t) provided by the Module Level Shutdown Devices 3-i of the Photovoltaic Module string 1 and captured by the signal capturing unit 2B of the detector device 2 can be analyzed by the processing unit 2C of the detector device 2 in a possible embodiment in the time domain. In a preferred embodiment, the captured string voltage waveform Vₛₜᵣ(t) provided by the chain of serially Module Level Shutdown Devices 3-i of the Photovoltaic Module string 1 is analyzed by the processing unit 2C of the detector device 2 after performing a signal transformation into the frequency domain.

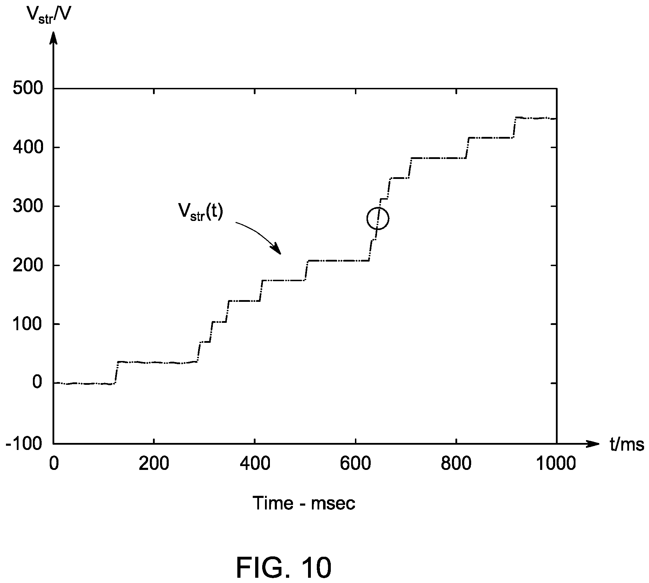

The captured string voltage waveform Vₛₜᵣ(t) comprises in a possible embodiment a staircase-shaped string voltage (as shown in Fig.10) applied to the string loop interface of the detector device 2 connected to the chain of Module Level Shutdown Devices 3-i of the Photovoltaic Module string 1 in a loop. The string voltage waveform Vₛₜᵣ(t) captured by the signal capturing unit 2B of the detector device 2 can be converted by an analog-to-digital converter ADC of the signal capturing unit 2B_{[HA1]} of the detector device 2 with a certain sampling rate SR into a digital signal. The data acquisition unit of the detector device 2 can form part of the signal capturing unit 2B of the detector device 2 as illustrated in the block diagram of Fig. 3. The digital signal can comprise string voltage data samples stored in a data memory of the integrated in the signal capturing unit 2B or integrated in the processing unit 2C of the detector device 2.

In a possible embodiment, a sample histogram h is derived by the signal processing unit 2C of the detector device 2 from the string voltage data samples stored in the data memory of the data acquisition unit integrated the detector device 2. In a possible embodiment, the sample histogram h can be derived from the stored string voltage data samples by counting repeatedly each string voltage data sample after a voltage step having substantially the same constant string voltage applied by the actual active Module Level Shutdown Devices 3-i of the Photovoltaic Module string 1 to the string loop interface of the signal capturing unit 2B of the detector device 2 of said Photovoltaic Module string 1.

In a preferred embodiment, the signal processing unit 2C of the detector device 2 is adapted to perform a Discrete Fourier Transform DFT on the sample histogram h of string voltage data samples stored in the data memory of the data acquisition unit. The data processing unit 2C can perform a Discrete Fourier Transform DFT on the sample histogram h of the string voltage data samples to calculate a histogram spectrum H of the sample histogram h in the frequency domain.

A number of periods between peaks in the calculated sample histogram h corresponding to a number N of voltage steps in the staircase-shaped string voltage waveform Vₛₜᵣ(t) applied by the chain of serially connected Module Level Shutdown Devices 3-i of the Photovoltaic Module string 1 to the string loop interface of the detector device 2 indicates a number of correctly installed Photovoltaic Modules 5-i and associated Module Level Shutdown Devices 3-i within the Photovoltaic Module string 1. Furthermore, a number of periods between peaks in the calculated sample histogram h allows in combination with the string voltage Vₛₜᵣ to determine an average open circuit voltage V_{oc} of the Module Level Shutdown Devices 3 of the Photovoltaic Modules 5 installed correctly within the Photovoltaic Module string 1.

In a possible embodiment, a DFT index at a maximum peak value within the calculated histogram spectrum H derived by the processing unit 2C of the detector device 2 of the Photovoltaic Module string 1 indicates a number N of correctly installed Photovoltaic Modules 5 and associated Module Level Shutdown Devices 3 within the respective Photovoltaic Module string 1.

In a possible embodiment, the determined number N of Photovoltaic Modules 5 and associated Module Level Shutdown Devices 3 having been installed correctly within the Photovoltaic Module string 1 can be compared by a comparator integrated in the processing unit 2C of the detector device 2 to a predefined set number Nₛₑₜ of Photovoltaic Modules 5 to verify that all Photovoltaic Modules 5 and associated Module Level Shutdown Devices 3 have been installed correctly within the respective Photovoltaic Module string 1. In a possible embodiment, the set number Nₛₑₜ can be input by a user via a user interface UI of the detector device 2. In an alternative embodiment, the set number Nₛₑₜ can be read from a configuration memory CONFIG-MEM or retrieved via the control and data interface from a remote central control entity of the photovoltaic system. The set number Nₛₑₜ may for instance be the number of all photovoltaic modules 5 bought by a user to be installed in a photovoltaic module string 1 of a photovoltaic system of the user. After installation of the photovoltaic modules 1 it can be verified whether all Photovoltaic Modules 5 and associated Module Level Shutdown Devices 3 have been installed correctly. This is the case if the DFT index at the maximum peak value is equal to Nₛₑₜ.

In a further possible embodiment of the method as illustrated in Fig. 4, if the number N of Photovoltaic Modules 5 and associated Module Level Shutdown Devices 3 having been connected correctly to the string loop interface of the detector device 2 of the respective Photovoltaic Module string 1 is less than the predefined set number Nₛₑₜ, countermeasures can be automatically triggered by a controller of the detector device 2 of the Photovoltaic Module string 1. Furthermore, if the number N of Photovoltaic Modules 5 and associated Module Level Shutdown Devices 3 found to be connected correctly to the string loop interface of the detector device 2 of the Photovoltaic Module string 1 is less than the predefined set number Nₛₑₜ, then the Module Level Shutdown Devices 3-i connected to the string loop interface of the detector device 2 of the Photovoltaic Module string 1 can be switched off automatically by the controller of the detector device 2 by stopping the Permission to Operate, PTO, signal transmission by the signal transmission unit 2A and can be switched on again by retransmitting the Permission to Operate, PTO, signal by the signal transmission unit 2A in order to repeat the detection procedure. Accordingly, the method as illustrated in the flowchart in Fig. 4 can be repeated in case that the number N of correctly installed Photovoltaic Modules 5 and associated Module Level Shutdown Devices 3 is found to be less than the predefined desired set number Nₛₑₜ of the Photovoltaic Modules 5 and Module Level Shutdown Devices 3.

In a possible embodiment of the method as illustrated in Fig. 4, the detection method can be performed during or after installation of the Photovoltaic Module string 1. In particular, after the installation process has been completed, the method as illustrated in Fig. 4 allows to verify whether all Photovoltaic Modules 5-i and associated Module Level Shutdown Devices 3-i of the respective Photovoltaic Module string 1 have been correctly installed. The detector device 2 can be integrated in an inverter having a DC input connected to the loop of the Module Level Shutdown Devices 3-i. After the DC input of the inverter i.e. the string loop interface has been connected to the Module Level Shutdown Devices 3-i of the Photovoltaic Module string 1 as illustrated in Fig. 2, the detector device 2 integrated in the inverter can initiate a detection process as illustrated in the flowchart of Fig. 4 to determine whether all Photovoltaic Modules 5-i and associated Module Level Shutdown Devices 3-i have been installed correctly.

In a further possible embodiment, also during normal operation of the Photovoltaic Module string 1 and its connected inverter, the detection method may be performed in the background, for instance periodically to monitor whether all Photovoltaic Modules 5-i and associated Module Level Shutdown Devices 3-i are still fully operational or not.

In a still further embodiment, the detector device 2 can be integrated in a portable test device connected to the Photovoltaic Module string 1 after installation to verify whether the installation has been completed successfully.

In a possible embodiment, the Permission to Operate, PTO, signal is a periodic signal transmitted using Power line Communication PLC by the signal transmission unit 2A of the detector device 2 of the Photovoltaic Module string 1 in a downlink channel / DC-cables 4 to the Module Level Shutdown Devices 3-i of the Photovoltaic Module string 1. The first interfaces 6-i of the Module Level Shutdown Devices 3-i of the Photovoltaic Module string 1 are connected via DC-cables 4 serially in a chain with each other. The first Module Level Shutdown Device 3-1 and the last Module Level Shutdown Device 3-N of the MLSD chain are connected via a pair of DC-cables 4 to the string loop interface of the detector device 2 4 to form a closed loop with the detector device 2 as illustrated in Fig. 2.

In a possible embodiment, the Permission to Operate, PTO, signal can also comprise an encoded address to activate a specific associated Module Level Shutdown Device 3-i of the Photovoltaic Module string 1 individually and to trigger the generation of a corresponding switch-on signal transient to switch on the associated Photovoltaic Module 5 connected to said addressed Module Level Shutdown Device 3 individually in response to the received Power line Communication PLC Permission to Operate, PTO, signal.

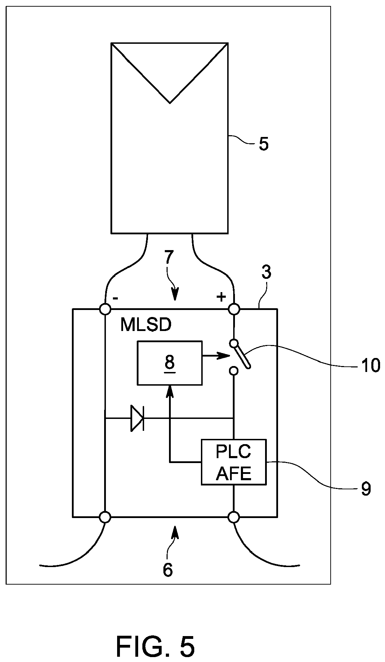

Fig. 5 shows a block diagram to illustrate a possible exemplary embodiment of a Module Level Shutdown Device 3-i of the Photovoltaic Module string 1 according to an aspect of the present invention. As can be seen in Fig. 5, the Module Level Shutdown Device 3 comprises a first interface 6 which is connectable via DC current cables 4 in a chain with other Module Level Shutdown Devices 3-i to the string loop interface of the detector device 2 to form a closed loop. The Module Level Shutdown Device 3 further comprises a second interface 7 connected to its associated Photovoltaic Module 5 as shown in Fig. 5. The Module Level Shutdown Device 3 comprises a controller 8 adapted to generate a control signal CRTL to switch on or to switch off the associated Photovoltaic Module 5 by a switch 10 in response to a Permission to Operate, PTO, signal received by the Module Level Shutdown Device 3 via the first interface 6 from the signal transmission unit 2A of the detector device 2 of the Photovoltaic Module string 1. In the simplified schematic diagram of the Module Level Shutdown Device 3 as illustrated in Fig. 5, the Module Level Shutdown Device 3 comprises a PLC AFE (analog front end) filter 9 adapted to filter the PLC signal and to feed the filtered signal into the controller 8.

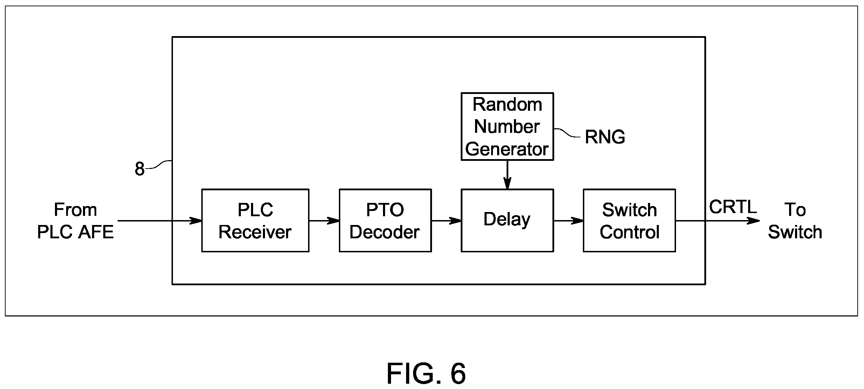

Fig. 6 shows a possible exemplary embodiment of a controller 8 within the Module Level Shutdown Device 3 receiving the filtered signal from the PLC RFE 9. In the illustrated implementation, the controller 8 integrated in the Module Level Shutdown Device 3 has a PLC receiver which demodulates the received baseband signal. A subsequent PTO decoder is adapted to decode the received PTO command. A random number generator integrated in the controller 8 of the Module Level Shutdown Device 3 can control a delay block as shown in Fig. 6. A delayed signal is supplied to a switch control circuit which is adapted to drive the main switch 10 of the Module Level Shutdown Device 3 as shown in the circuit diagram of Fig. 5. The controller 8 as shown in the schematic block diagram of Fig. 6 can be implemented in different ways. The controller 8 as shown in Fig. 6 can be implemented using a microcontroller, an ASIC or an FPGA or another kind of hardware solution or even a mix of these different technical implementations. Each block illustrated in Fig. 6 can be either implemented as a hardware or as a software module.

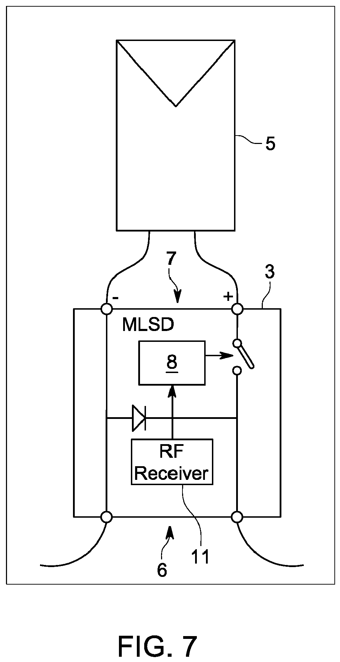

Fig. 7 shows an alternative embodiment of a Module Level Shutdown Device 3 in a Photovoltaic Module string 1 according to the present invention. In the illustrated embodiment of Fig. 7, the Module Level Shutdown Device 3 operates through radio communication instead of PLC communication. In the illustrated embodiment of Fig. 7, the Module Level Shutdown Device 3 comprises an RF receiver 11 to receive a radio communication command signal from a RF transmitter which can be integrated as a signal transmission unit 2A in the detector device 2 of the Photovoltaic Module string 1.

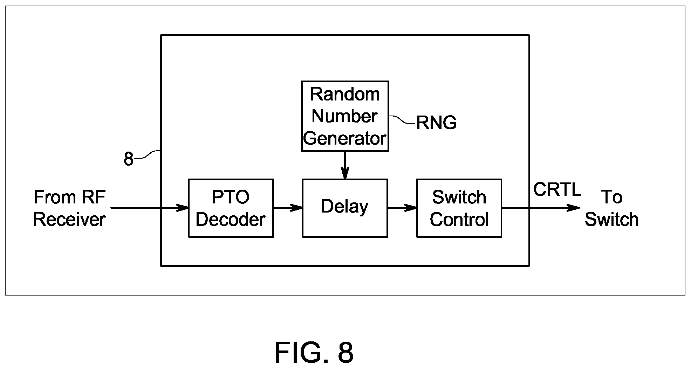

Fig. 8 shows a possible exemplary implementation of a controller 8 within the Module Level Shutdown Device 3 as illustrated in Fig. 7. Similar to the controller 8 illustrated in Fig. 6, the controller 8 comprises a PTO decoder, a random number generator RNG, a delay block and a switch control circuit to drive the main switch 10.

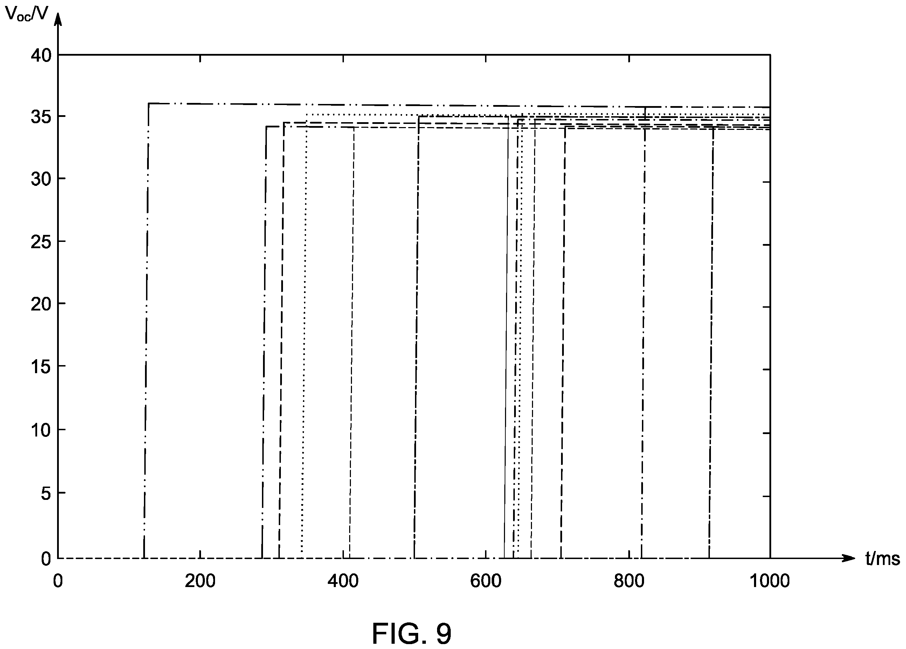

Fig. 9 shows a diagram for illustrating the operation of the method and apparatus according to the present invention. Fig. 9 illustrates the randomized switch-on delay of the Module Level Shutdown Devices 3-i within the Photovoltaic string 1 according to a first method step S1. In the illustrated example of Fig. 9 a number N - here N=13 - of photovoltaic modules 5 are switched on subsequently at different time points (signal transients). The first photovoltaic module 5 is switched on at around 100 msec and the last (thirteenth) photovoltaic module 5 is switched on at around 900 msec. All photovoltaic modules 5 comprise in the example illustrated in Fig. 9 have an open circuit voltage V_{oc} of around 35V. In the given example of Fig. 9 the 8^{th} photovoltaic module 5 and the 9^{th} photovoltaic module 5 are switched on almost simultaneously. For example the 8^{th} photovoltaic module 5 could be switched on with the second photovoltaic module 5 in the chain. Fig. 9 illustrates the signal transients within a predefined maximum delay time period of e.g. 1000 milliseconds. The spread of the switch-on transients is within 1000 milliseconds, i.e. within 1 second as shown in Fig. 9. The maximum delay time spread can be configured or predefined depending on the use case in a design phase of the photovoltaic system 1. The maximum delay time period can be for instance defined in a range of 0.1 seconds to 10 seconds. For each connection, i.e. at each Module Level Shutdown Device 3, another random value can be generated by the random number generator RNG of the controller 8 integrated in the Module Level Shutdown Device 3 as shown in Figs. 6,8.

This does result in a string voltage waveform Vₛₜᵣ(t) provided by the chain of Module Level Shutdown Devices 3 of the Photovoltaic Module string 1 applied to the string loop interface of the detector device 2 as illustrated in Fig. 10 according to second method step S2. In general the string voltage waveform Vₛₜᵣ(t) is resulting from the non-simultaneous connection of the MLSDs 3. As can be seen in Fig. 10, the captured string voltage waveform Vₛₜᵣ(t) applied to the string loop interface of the signal capturing unit 2B of the detector device 2 increases stepwise. Each voltage step in Fig. 10 occurs at a time of a corresponding signal transient shown in Fig. 9. At each voltage step of the captured string voltage waveform as shown in Fig. 10, a Photovoltaic Module 5 is switched on within the loop by its associated Module Level Shutdown Device 3 through the main switch 10 as shown in the schematic block diagrams of Figs. 5, 7. Accordingly, each voltage step of the captured string voltage waveform as shown in Fig. 10 represents one Photovoltaic Module 5 and its associated Module Level Shutdown Device 3. In the example of Figs 9, 10 a voltage step at around 700 msec is hardly visible because two photovoltaic modules 5 are switched on almost simultaneously.

In a possible implementation, an analysis of the staircase shaped waveform Vₛₜᵣ(t) as illustrated in Fig. 10 may be performed in the time domain by counting the voltage steps of the staircase shaped waveform Vₛₜᵣ(t) according to the third method step S3. Counting of voltage steps in the time domain proves to be difficult and error prone if a constant voltage between two voltage steps is small or very small. Therefore in a preferred embodiment of the method and apparatus according to the present invention, the analyzing of the captured string voltage waveform Vₛₜᵣ(t) provided by Module Level Shutdown Devices 3 the Photovoltaic Module string 1 to determine the number N of Photovoltaic Modules 5 and associated Module Level Shutdown Devices 3 within the Photovoltaic Module string 1 as being installed correctly is performed after signal transformation in the frequency domain. This makes the detection of correctly installed photovoltaic modules 5 and associated Module Level Shutdown Device 3 more resilient, robust and less error prone than the analysis of the staircase shaped waveform Vₛₜᵣ(t) in the time domain.

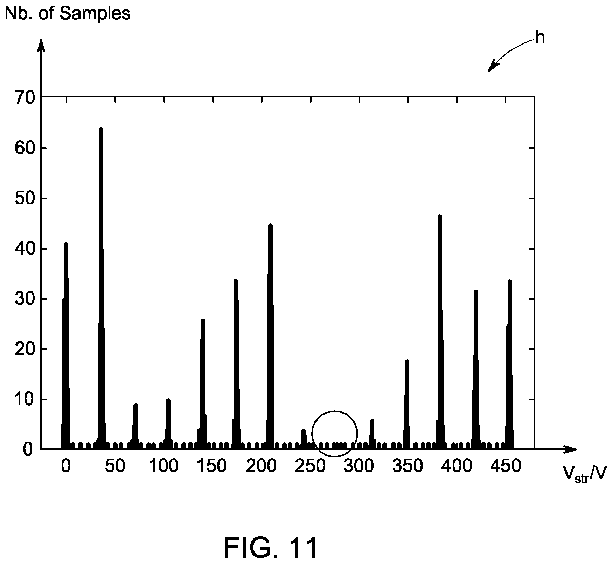

Fig. 11 illustrates an exemplary sample histogram h which is derived by the processing unit 2C of the detector device 2 from the string voltage data samples stored in the data memory of the detector device 2 - also according to third method step S3. In the example of Fig. 11 a peak at around 275V is not/hardly visible since two photovoltaic modules 5 have been switched on almost simultaneously as mentioned above. In a possible embodiment, the sample histogram h can be derived from the stored string voltage data samples by a counter which is counting the string voltage data samples having the same string voltage Vₛₜᵣ applied by the chain of Module Level Shutdown Devices 3 the Photovoltaic Module string 1 to the string loop interface of the detector device 2 of the Photovoltaic Module string 1. The picture illustrated in Fig. 11 corresponds to the string voltage waveform Vₛₜᵣ(t) illustrated in Fig. 10. The sample rate SR is used as long as the voltage amplitude is substantially constant for counting the samples with the counter.

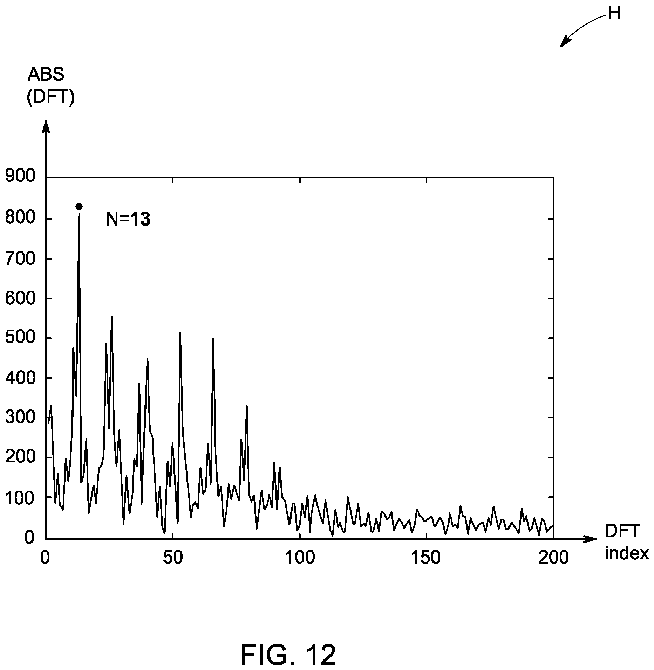

In a further processing step, the processing unit 2C of the detector device 2 can perform a Discrete Fourier Transform DFT on the sample histogram h of string voltage data samples as illustrated in Fig. 11. In this way, the processing unit 2C of the detector device 2 can calculate a spectrum of the sample histogram h in the frequency domain as illustrated in Fig. 12 as a histogram spectrum H. In the frequency domain the hardly seen constant voltage at around 700ms in Fig. 10 and the hardly seen sample at around 275V in Fig. 11 is no problem for the DFT calculation.

The calculated sample histogram spectrum H shown in Fig. 12 - also according to third step S3 -corresponds to sample histogram h of string voltage data samples as illustrated in Fig. 11 and to the number of voltage steps in the staircase-shaped string voltage waveform Vₛₜᵣ(t) provided by the chain of Module Level Shutdown Devices 3 of the Photovoltaic Module string 1 to the string loop interface of the detector device 2 as illustrated in Fig. 10. In the illustrated diagram one can see the DFT index (x) and the magnitude/abs (y) of the peak values.

The DFT index N at a maximum peak value within the calculated histogram spectrum H derived by the processing unit 2C of the detector device 2 does indicate the number N of correctly installed Photovoltaic Modules 5 and associated Module Level Shutdown Devices 3 within the respective monitored Photovoltaic Module string 1. In the illustrated example of Fig. 12, the number N of correctly installed Photovoltaic Modules 5 and associated Module Level Shutdown Devices 3 is thirteen (N=13). This can be derived from the maximum peak in the histogram spectrum H. The absolute value (ABS(DFT)) of the DFT index zero (N=0) (not shown) is often higher than all other values. Accordingly it is excluded in a possible embodiment before looking for the maximum value in the histogram spectrum H. The maximum peak is the first peak in the histogram spectrum H as also shown in the example of Fig.12.

The determined number N of correctly installed Photovoltaic Modules 5 and associated Module Level Shutdown Devices 3 can be compared by a comparator of the processing unit 2C of the detector device 2 with a predefined set number Nₛₑₜ of Photovoltaic Modules 5 and associated Module Level Shutdown Devices 3 to verify that all Photovoltaic Modules 5 have been installed correctly within the Photovoltaic Module string 1 and have been connected correctly via the DC-cables 4 of the loop to the string loop interface of the detector device 2. If the detector device 2 is integrated in the inverter of the Photovoltaic Module string 1, it can be verified in this way also that the Photovoltaic Modules 5 and the associated Module Level Shutdown Devices 3 have been correctly connected to the DC-input of the inverter of the Photovoltaic Module string 1. For instance, in the illustrated example of Fig. 12, if the planned number N of Photovoltaic Modules 5 and associated Module Level Shutdown Devices 3 within the Photovoltaic Module string 1 is fourteen (Nₛₑₜ=14) and it is determined that the number N of correctly installed Photovoltaic Modules 5 and associated Module Level Shutdown Devices 3 is only thirteen (N=13), it can be found that one Photovoltaic Module 5 and/or its associated Module Level Shutdown Device 3 has not been correctly installed. In this case, a controller of the detector device 2 may in a possible implementation trigger countermeasures, in particular transmitting a warning message to a remote central control entity of the photovoltaic system. Further, a warning message may be displayed on a display unit of a user interface UI of the detector device 2 to an operator of the photovoltaic system. Moreover, if the number N of Photovoltaic Modules 5 and associated Module Level Shutdown Devices 3 having been installed correctly in the Photovoltaic Module string 1 is less than the predefined or preconfigured set number Nₛₑₜ, the Module Level Shutdown Devices 3 of the Photovoltaic Module string 1 can be automatically switched off by the controller of the detector device 2 by stopping the transmission of the Permission to Operate, PTO, signal. The transmission of the Permission to Operate, PTO, signal can be started again by the controller of the detector device 2 to repeat the detection procedure as shown in the flowchart of Fig. 4. The Permission to Operate, PTO, signal can comprise a periodic signal transmitted by the signal transmission unit 2A of the detector device 2 via Power line Communication PLC in a downlink channel / DC-cable 4 to the loop of Module Level Shutdown Devices 3 of the Photovoltaic Module string 1 connected via DC-cables 4 to the detector device 2 of the Photovoltaic Module string 1.

In a possible embodiment, a waveform analysis can be performed by a tester comprising an integrated detector device 2. In an alternative embodiment, a waveform analysis can be performed by a detector device 2 integrated in an inverter connected to the respective Photovoltaic Module string 1.

The signal transmission unit 2A of the detector device 2 can send a PLC PTO signal in a downlink channel to the chain of serially connected Module Level Shutdown Devices 3 and the string voltage waveform Vₛₜᵣ(t) is captured by the signal capturing unit 2B of the detector device 2. In a possible implementation, a microcontroller having a built-in 12-bit analog-to-digital converter ADC can be used to perform the signal waveform capturing and signal analysis. The processing unit 2C comprising such a microcontroller can be used to calculate a histogram h as illustrated in Fig. 11 and a histogram spectrum H as illustrated in Fig. 12. The number of periods between the peaks, i.e. the number of voltage steps, can be determined by DFT using FFT. The FFT result as illustrated in Fig. 12 can be used to derive the number N of correctly connected Photovoltaic Modules 5 and associated Module Level Shutdown Devices 3 within the Photovoltaic Module string 1.

Summarizig a signal transmission unit 2A within the detector device 2 transmits a Permission to Operate, PTO, signal to activate the Module Level Shutdown Devices, MLSDs, 3. The Module Level Shutdown Devices, MLSDs, 3 connect the PV modules, PVMs, 5 one after the other. The connection delay of each Module Level Shutdown Device, MLSD, 3 is determined by a random number in a predefined period. A capturing unit 2B acquires samples of the string voltage waveform Vₛₜᵣ(t), resulting from the non-simultaneous connection of the MLSDs 3. A processing unit 2C determines the number of properly connected Photovoltaic Modules, PVMs, 5 equipped with associated Module Level Shutdown Devices, MLSDs, 3 by generating a histogram from the string voltage waveform Vₛₜᵣ(t) and then by applying a Discrete Fourier Transform, DFT, on the generated histogram.

In case that the photovoltaic system comprises a multi-string system having multiple Photovoltaic Module strings 1, the detection method according to the present invention can be performed separately on each Photovoltaic Module string 1 of the photovoltaic system. The method according to the present invention can be performed by photovoltaic system owners or by operators performing the installation of the photovoltaic system. The method according to the present invention can also be used to monitor a photovoltaic system during its operation, for instance to detect an interruption of an installation connection within the photovoltaic system.

## Claims

1. A method for detection of faulty installations of Photovoltaic Modules (5) equipped with associated Module Level Shutdown Devices, MLSDs, (3) connected serially within a string (1) of Photovoltaic Modules to a string loop interface of a detector device (2)
wherein the method comprises the steps of:
- transmitting (S1) by the detector device(2) a Permission to Operate, PTO, signal through its string loop interface to a chain of serially connected Module Level Shutdown Devices, MLSDs,(3) of the Photovoltaic Modules string (1) using Power Line Communication, PLC;
- capturing (S2) by the detector device (2) a string voltage waveform (Vₛₜᵣ(t)) applied by the chain of serially Module Level Shutdown Devices, MLSDs, (3) of the Photovoltaic Module string (1) to the string loop interface of the detector device (2) as a result of switch-on transients generated by the Module Level Shutdown Devices, MLSDs, (3) in response to the Permission to Operate, PTO, signal received by the chain of serially connected Module Level Shutdown Devices, MLSDs, (3) from the string loop interface of the detector device (2) , wherein switch-on delays of the generated switch-on transients are spread in a predefined maximum delay time period; and
- analyzing (S3) by the detector device (2) the captured string voltage waveform ,Vₛₜᵣ(t) ,provided by the chain of serially connected Module Level Shutdown Devices, MLSDs, (3) of the Photovoltaic Module string (1) to determine a number, N, of Photovoltaic Modules (5) and associated Module Level Shutdown Devices, MLSDs, (3) within said Photovoltaic Module string (1) being installed correctly within said Photovoltaic Module string (1) .

2. The method according to claim 1 wherein the switch-on transients generated by the Module Level Shutdown Devices, MLSDs,(3) of the Photovoltaic Module string (1) are spread randomly in the predefined maximum delay time period.

3. The method according to any of the preceding claims 1 or 2 wherein the detector device (2) connected through its string loop interface to the chain of serially connected Module Level Shutdown Devices, MLSDs, (3) of the Photovoltaic Module string (1) is implemented in an inverter device or is implemented in a test device used to test the Photovoltaic Module string (1).

4. The method according to any of the preceding claims 1 to 3 wherein the captured string voltage waveform ,Vₛₜᵣ(t) provided by the chain of serially connected Module Level Shutdown Devices, MLSDs, (3) of the Photovoltaic Module string (1) is analyzed by a processing unit (2C) of the detector device (2) in the time domain or is analyzed after signal transformation in the frequency domain.

5. The method according to any of the preceding claims 1 to 4 wherein the captured string voltage waveform Vₛₜᵣ(t) comprises a staircase shaped string voltage applied to the string loop interface of the detector device (2) connected to the chain of serially connected Module Level Shutdown Devices, MLSDs,(3) of the Photovoltaic Module string (1) in a loop and wherein the captured string voltage waveform Vₛₜᵣ(t) is converted by an Analog-to-Digital Converter, ADC, of a data acquisition unit of the detector device (2) with a certain sampling rate, SR, into a digital signal comprising string voltage data samples stored in a data memory of a data acquisition unit of said detector device (2) .

6. The method according to claim 5 wherein a sample histogram (h) is derived by the processing unit (2C) of the detector device (2) from the string voltage data samples stored in the data memory of the data acquisition unit of said detector device (2), wherein the sample histogram (h) is derived from the stored string voltage data samples by counting repeatedly for the whole string voltage waveform the string voltage data samples having the same constant string voltage applied by the chain of serially connected Module Level Shutdown Devices, MLSDs, (3) of the Photovoltaic Module string (1) to the string loop interface of the detector device (2) connected to the chain of serially connected Module Level Shutdown Devices, MLSDs, (3) of said Photovoltaic Module string (1) in a closed loop.

7. The method according to any of the preceding claims 1 to 6 wherein the processing unit (2C) of the detector device (2) performs a Discrete Fourier Transform, DFT, on the sample histogram (h) of the string voltage data samples to calculate a spectrum (H) of the sample histogram (h) in the frequency domain.

8. The method according to claim 7 wherein a DFT index at a maximum peak value within the calculated histogram spectrum (H) derived by the processing unit (2C) of the detector device (2) connected to the chain of serially connected Module Level Shutdown Devices, MLSDs, (3) of the Photovoltaic Module string (1) indicates a number, N, of Photovoltaic Modules (5) and associated Module Level Shutdown Devices, MLSDs, (3) installed correctly within the Photovoltaic Module, string (1),
wherein the determined number, N, of Photovoltaic Modules (5) and associated Module Level Shutdown Devices, MLSDs, (3) installed correctly within the Photovoltaic Module string (1) is compared by a comparator of the processing unit (2C) of the detector device (2) to a predefined set number, N ₛₑₜ, to verify that all Photovoltaic Modules (5) and associated Module Level Shutdown Devices, MLSDs, (3) have been installed correctly within the Photovoltaic Module string (1) and have been connected correctly to the string loop interface of the detector device (2).

9. The method according to claim 8 wherein if the number ,N, of Photovoltaic Modules (5) and associated Module Level Shutdown Devices, MLSDs, (3) installed correctly within the Photovoltaic Module string (1) and connected correctly to the string loop interface of the detector device (2) is less than the predefined set number, N ₛₑₜ, countermeasures are triggered by a controller of the detector device (2) and/or wherein if the number, N, of Photovoltaic Modules (5) and associated Module Level Shutdown Devices, MLSDs, (3) installed correctly within the Photovoltaic Module string (1) and connected correctly to the detector device (2) is less than the predefined set number, Nₛₑₜ , the Module Level shutdown Devices ,MLSDs, (3) of the Photovoltaic Module string (1) are switched off by stopping the transmission of a Permission-to-Operate, PTO, signal and switched on again by transmitting again the Permission-to-Operate, PTO, signal in order to repeat the procedure of the detection method.

10. The method according to any of the preceding claims 1 to 9 wherein the Permission-to-Operate, PTO, signal is a periodic signal transmitted by means of Power line Communication, PLC, by a signal transmission unit (2A) of the detector device (2) connected via a pair of DC-cables (4) to the chain of serially connected Module Level Shutdown Devices, MLSDs, (3) of the Photovoltaic Module string (1) in a downlink channel.

11. The method according to claim 10 wherein the Permission-to-Operate, PTO, signal comprises an encoded address to activate a specific associated Module Level Shutdown Device, MLSD,(3) of the Photovoltaic Module string (1) individually and to trigger the generation of a corresponding switch-on transient to switch on the associated Photovoltaic Module (5) connected to the addressed Module Level Shutdown Device, MLSD, (3) individually in response to the received Power line Communication, PLC, Permission to Operate, PTO, signal.

12. A detector device (2) having a string loop interface connected to a chain of serially connected Module Level Shutdown Devices, MLSDs, (3) of a Photovoltaic Module string (1), said detector device (2) comprising means for performing the method according to any of the preceding claims 1 to 11.

13. The detector device (2) according to claim 12 comprising:
- a signal transmitting unit (2A) adapted to transmit by means of Power Line Communication, PLC, a Permission to Operate, PTO, signal through the string loop interface of the detector device (2) to the chain of serially connected connected Module Level Shutdown Devices, MLSDs,(3) of the Photovoltaic Module string (1) ;
- a signal capturing unit (2B) adapted to capture a string voltage waveform Vstr(t) provided by the chain of serially connected Module Level Shutdown Devices, MLSDs, (3) of the Photovoltaic Module string (1) to the string loop interface of the detector device (2) as a result of switch-on transient steps generated by the Module Level Shutdown Devices, MLSDs, (3) of the Photovoltaic Module string (1) in response to the received Permission to Operate, PTO, signal, wherein switch-on delays of the switch-on transients are spread in a predefined maximum delay time period; and
- a processing unit (2C) adapted to analyze the captured string voltage waveform Vstr(t) provided by the chain of serially connected Module Level Shutdown Devices, MLSDs, (3) of the Photovoltaic Module string (1) to determine a number, N, of Photovoltaic Modules (5) and associated Module Level Shutdown Devices, MLSDs, (3) within the Photovoltaic Module string (1) being installed correctly within the said Photovoltaic Module string (1).

14. The detector device according to claim 12 or 13 further comprising a user interface and/or a control and data interface to signal a faulty installation or a failure-free installation of Photovoltaic Modules (5) and associated Module Level Shutdown Devices, MLSDs, (3) within the Photovoltaic Module string (1).

15. A Module Level Shutdown Device, MLSD, (3) of a Photovoltaic Module string (1) comprising:
a first interface (6) connectable via DC-cables (4) in a chain with other Module Level Shutdown Devices, MLSDs, and
to a string loop interface of a detector device (2) to form a closed loop;
a second interface (7) connected to an associated Photovoltaic Module (5) and
a controller (8) adapted to generate a control signal (CRTL) applied to a main switch (10) of the Module Level Shutdown Device (3) used to switch on or to switch off the associated Photovoltaic Module (5) in response to a Permission to Operate, PTO, signal received by the Module Level Shutdown Device, MLSD, (3) via its first interface (6) from the string loop interface of the detector device (2), wherein a delay of the generated control signal (CRTL) with respect to a reception time of the Permission to Operate, PTO, signal is spread by the controller (8) of the Module Level Shutdown Device, MLSD, (3) in a predefined maximum delay time period.

16. The Module Level Shutdown Device, MLSD, according to claim 15 wherein the controller (8) Module Level Shutdown Device, MLSD, (3) comprises a Random Number Generator (RNG) adapted to spread the control signal (CRTL) applied to the main switch (10) of the Module Level Shutdown Device (3) to switch on or to switch off the associated Photovoltaic Module (5) randomly within the predefined maximum delay time period.
